# EUROPÄISCHE PATENTSCHRIFT

(11) **EP 1 672 262 B1**
(45) Veröffentlichungstag und Bekanntmachung des Hinweises auf die Patenterteilung: **22.08.2007**
(21) Anmeldenummer: 04405779.2
(22) Anmeldetag: 16.12.2004
(51) Int. Cl.: F16K 31/60

(54) **Einhebel-Mischventil mit Bügelgriff**
Single handle mixing valve with U-shaped handle
Mitigeur à levier unique avec poignée en 'U'

(43) Veröffentlichungstag der Anmeldung: 21.06.2006
(73) Patentinhaber: arwa AG, 8304 Wallisellen (ZH) (CH)
(72) Erfinder: Egli, Werner, CH-8194 Hüntwangen (CH)
(74) Vertreter: Ottow, Jens M.

(56) Entgegenhaltungen:
- EP-A- 0 237 473
- DE-A1- 3 327 776
- DE-A1- 3 427 959
- DE-A1- 3 503 583
- DE-A1- 3 743 212
- DE-C1- 4 105 387

## Beschreibung

### TECHNISCHES GEBIET

Die vorliegende Erfindung bezieht sich auf das Gebiet der Sanitär-Armaturen. Sie betrifft ein Einhebel-Mischventil mit Bügelgriff gemäss dem Oberbegriff des Anspruchs 1.

Ein solches Einhebel-Mischventil ist z.B. aus der Druckschrift DE-A1-34 27 959 bekannt.

### STAND DER TECHNIK

Einhebel-Mischventile mit einem Bügelgriff für die Betätigung des Ventils sind aus dem Stand der Technik bekannt. Solche Ventilbetätigungen werden in der Regel bei Keramikscheiben-Kartuschen verwendet, bei denen eine erste Ventilscheibe fest mit dem Gehäuse verbunden ist, und eine zweite Ventilscheibe drehbeweglich und in einer Richtung verschiebbar mit einem Betätigungsschaft verbunden ist.

Die Druckschrift EP-A1-0 237 473 zeigt (in Fig. 1 und 2) eine Betätigungsanordnung, bei der eine Steuerwelle (5), die in der horizontalen Durchgangsbohrung (46) eines Führungsteils (43) drehbar gelagert ist, bis zu einer Mantelfläche des Gehäuses (32) vorsteht und dort mittels Kerbverzahnung (6) und Hülsen (7) mit dem Bügel (3) verbunden ist. Ein Steuerstift (15) ist starr in der Steuerwelle festgesetzt und verschiebt zur Einstellung der Durchflussmenge über ein Verbindungsstück (18) die obere bewegliche Keramikscheibe (20). Zur Einstellung des Mischungsverhältnisses kann die obere Keramikscheibe (20) über das Führungsteil (43) um eine vertikale Achse gedreht werden.

Nachteilig bei dieser bekannten Ausführung ist, dass handelsübliche Kartuschen, die in der Regel einen Betätigungsschaft mit oberem Vierkant zur Befestigung eines Griffes aufweisen, nicht verwendet werden können. Nachteilig ist weiterhin, dass die Verbindung des Bügels (3) mit dem Steuerstift (15) aufgrund der Vielzahl von Einzelteilen (Steuerwelle, Hülsen, Schrauben) und der eingesetzten Kerbverzahnung in Herstellung und Montage vergleichsweise aufwändig ist.

Eine weitere Ausführung einer Betätigungsanordnung ist aus der Druckschrift DE-A1-37 43 212 bekannt. Bei dieser Ausführung (siehe Fig. 1-4) ist der als Bügel ausgebildete, einstückige Handhebel (3) drehfest mit dem inneren Hebel (11) einer Mischkartusche (5) mittels eines Vierkants verbunden. Der innere Hebel (11) ist um eine horizontale Schwenklagerachse (51) verschwenkbar. Der Handhebel (3) ist oberhalb der Schwenklagerachse (51) mit Zapfen (31) durch Durchtrittsöffnungen (23) im Hebelkopfgehäuse (2) geführt. Beim Verschwenken des Handhebels (3) bewegen sich die Zapfen (31) auf einen Kreisbogen um die Schwenklagerachse (51). Dies führt notgedrungen dazu, dass die Durchtrittsöffnungen (23) als Ringbogenstücke (24) ausgebildet sein müssen, was nachteilig für das Design und die Hygienefreundlichkeit ist.

Aus der DE-A1-34 27 959 ist ein Einhebelmischer bekannt (Fig. 4, 5), bei dem die Kartusche durch einen Bedienhebel betätigt wird, dessen Gabelarme durch einen Bügel verbunden sind, wobei zwischen den Gabelarmen und dem Bügel liegende Zapfenabschnitt koaxial zur Schwenkachse der Kartusche verlaufen. Eine eigenständige Lagerung der Zapfenabschnitte ist hier nicht vorgesehen.

Aus der DE-C1-41 05 387 schliesslich ist eine Einhebel-Mischarmatur bekannt, bei welcher der Betätigungshebel der Kartusche von einer koaxial zu dessen Schwenkachse verlaufenden Welle durchsetzt und drehfest mit dieser verbunden ist. An den Enden der Welle ist ein bügelartiger Hebel als Bedienelement befestigt. Für die Welle ist ein zentrales Drehlager vorgesehen, durch das die Welle hindurch gesteckt ist. Dieser Aufbau erfordert eine aufwändige Ausgestaltung und Befestigung von Welle und Bedienhebel.

### DARSTELLUNG DER ERFINDUNG

Es ist Aufgabe der Erfindung, ein Einhebel-Mischventil mit Bügelgriff zu schaffen, welches die Nachteile bekannter Ausführungen vermeidet und sich insbesondere bei einem einfachen Aufbau durch erhöhte Hygienefreundlichkeit und einen verbesserten optischen Eindruck auszeichnet.

Die Aufgabe wird durch die Gesamtheit der Merkmale des Anspruchs 1 gelöst. Der Kern der Erfindung besteht darin, für die Ventilfunktion eine Standard-Kartusche einzusetzen und den Betätigungsschaft der Standard-Kartusche mit dem Bügelgriff über aus dem Griffkopf heraustretende Zapfen zu verbinden, deren Drehachse mit der Schwenkachse des Betätigungsschaftes zusammenfällt, wobei innerhalb des Griffkopfes eine obere und untere Führungshülse miteinander verbunden sind, und wobei die Zapfen zwischen den beiden Führungshülsen drehbar gelagert sind. Die beiden Führungshülsen sind insbesondere durch erste Schnappverbindungen miteinander lösbar verbunden.

Vorzugsweise sind die Zapfen zwischen den Führungshülsen in einem aus zwei Lagerhälften gebildeten Lager drehbar gelagert, wobei die Lagerhälften den Führungshülsen zugeordnet und jeweils an der zugeordneten Führungshülse befestigt sind. Insbesondere sind die Lagerhälften an den zugeordneten Führungshülsen durch zweite Schnappverbindungen lösbar befestigt.

Der Griffkopf ist bevorzugt nach aussen durch eine über die Führungshülsen stülpbare Haube abgedeckt, die konzentrisch zu den Führungshülsen angeordnet ist und an der unteren Führungshülse lösbar gehalten wird. Zur lösbaren Halterung der Haube sind mit Vorteil am äusseren Umfang der unteren Führungshülse verteilt Nocken angeordnet, welche mit einer umlaufenden Nut auf der Innenseite der Haube in Eingriff sind. Die Haube weist zum Überstülpen über die Zapfen entsprechende Ausnehmungen auf.

Die Lagerhälften weisen von ausserhalb des Griffkopfes sichtbare stirnseitige Flächen auf, die als dekorative Flächen ausgebildet sind, oder zur Markierung der Drehrichtung des Mischventils im Sinne von heiss/kalt farbig, insbesondere rot/blau, ausgelegt sind.

Die Zapfen stehen innerhalb des Griffkopfes vorzugsweise mit einem Joch in Verbindung, welches seinerseits mit dem Betätigungsschaft in Verbindung steht. Der Betätigungsschaft ist zweckmässigerweise als Vierkant ausgebildet, und das Joch sitzt mit einer entsprechenden Vierkant-Aussparung auf dem Betätigungsschaft, wobei das Joch auf dem Betätigungsschaft mittels einer Schraube fixiert ist.

Besonders einfach und optisch ansprechend ist es, wenn der Bügelgriff, die Zapfen und das Joch Abschnitte eines einstückigen Betätigungselements sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: eine Draufsicht eines Mischventils mit Bügelgriff gemäss einem bevorzugten Ausführungsbeispiel der Erfindung;
- Fig. 2: eine Ansicht von vorn des Mischventils aus Fig. 1;
- Fig. 3: eine Schnittansicht des Mischventils aus Fig. 2 nach der Schnittlinie III-III in Fig. 2;
- Fig. 4: eine Schnittansicht des Mischventils aus Fig. 3 nach der Schnittlinie IV-IV in Fig. 3;
- Fig. 5: eine Schnittansicht des Mischventils aus Fig. 3 nach der Schnittlinie V-V in Fig. 3;
- Fig. 6: eine perspektivische Explosionszeichnung des Griffkopfes des Mischventils aus Fig. 3; und
- Fig. 7: eine perspektivische Explosionszeichnung der Führungshülsen und Lagerhälften im Griffkopf des Mischventils aus Fig. 3.

### WEGE ZUR AUSFÜHRUNG DER ERFINDUNG

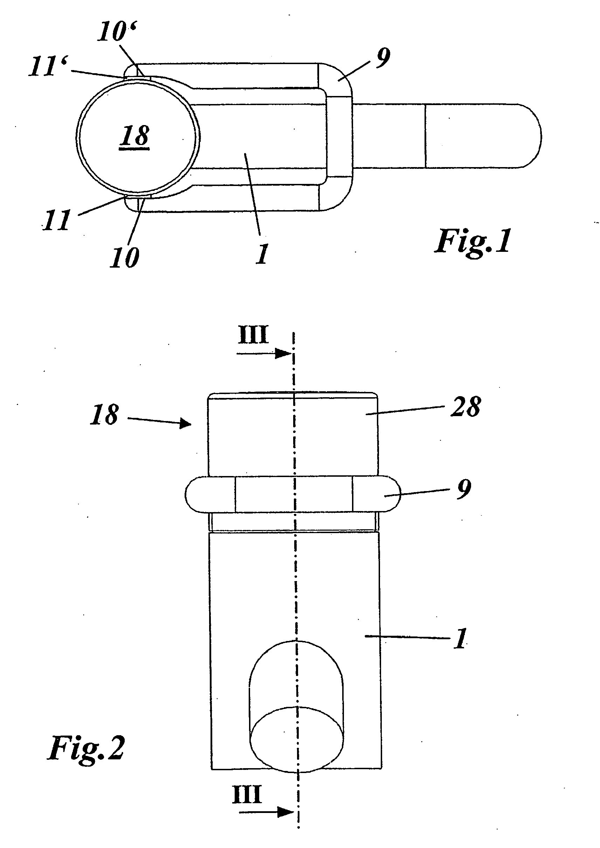

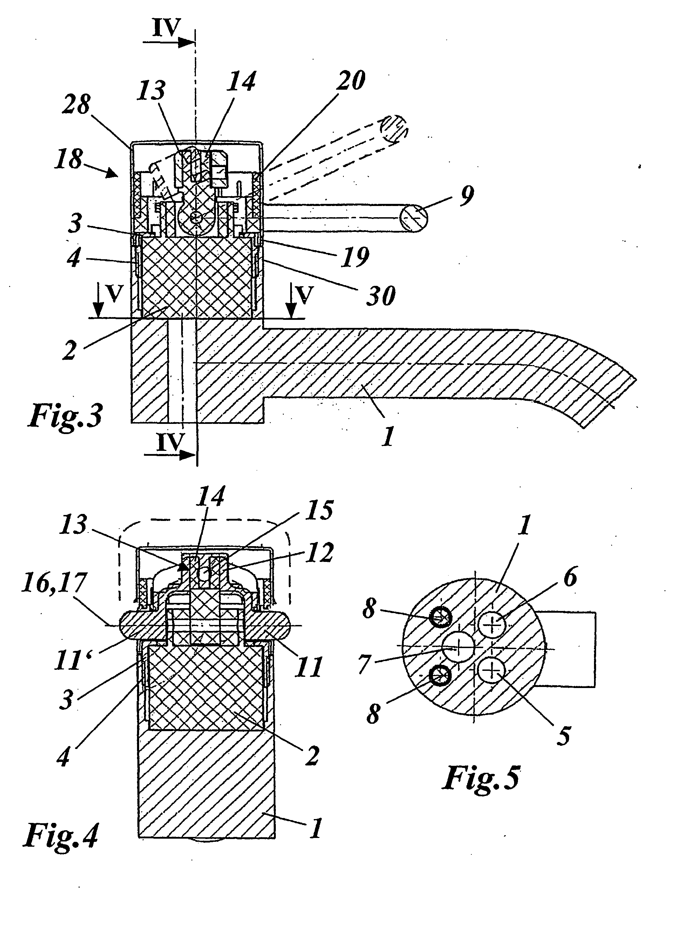

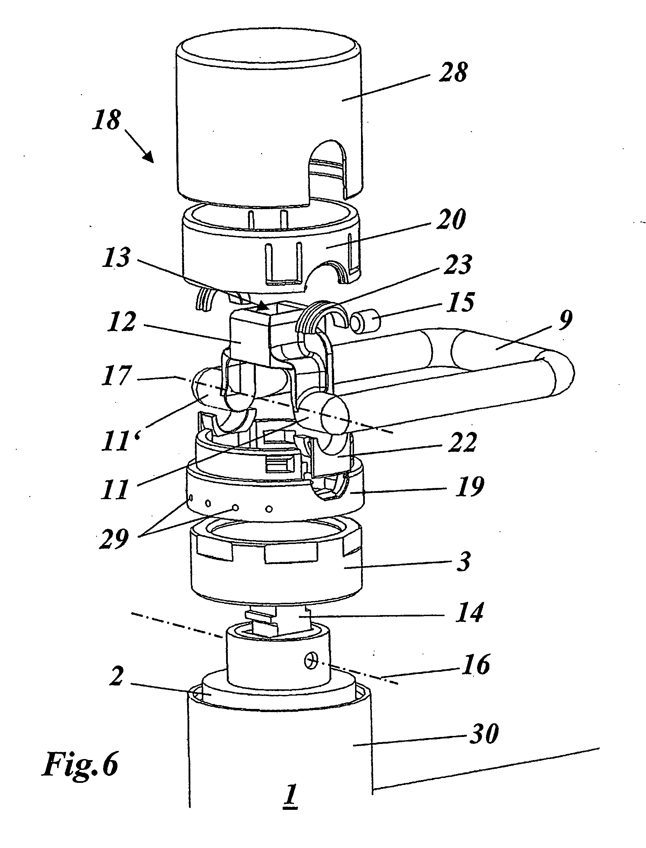

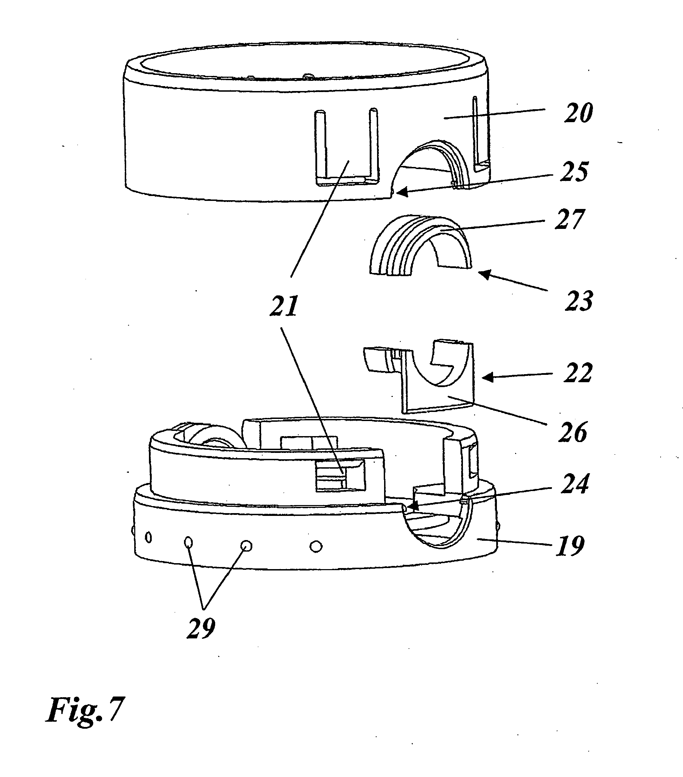

In den Fig. 1 bis 5 ist ein bevorzugtes Ausführungsbeispiel eines Mischventils mit Bügelgriff nach der Erfindung in zwei Ansichten (Fig. 1, 2) und drei SchnittAnsichten (Fig. 3-5) dargestellt. In den Fig. 6 und 7 sind die Details des zugehörigen Griffkopfes in perspektivischen Explosionszeichnungen wiedergegeben. Die Erfindung kann bei einer Wandarmatur für einen Waschtisch, eine Dusche oder ein Bad eingesetzt werden. Die Erfindung kann aber auch ebenso gut bei einer Einloch-Standarmatur für einen Waschtisch oder einen Spültisch Anwendung finden. Im einen Fall ist die Kartusche mit dem Betätigungsschaft vertikal nach oben angeordnet, im anderen horizontal nach vorn oder horizontal zur Seite.

Bei dem in den Fig. 1-7 dargestellten Mischventil ist in einem Armaturengehäuse 1 eine handelsübliche Mischkartusche 2 eingebaut und mittels einer Überwurfmutter 3 gesichert, die mit Hilfe eines Gewindes 4 im Armaturengehäuse 1 festgezogen ist (Fig. 3).

An der Verbindungsstelle Armaturengehäuse 1/Mischkartusche 2 weist das Armaturengehäuse 1 verschiedene mit der Mischkartusche 2 korrespondierende Bohrungen auf (Fig. 5). Mit dem Bezugszeichen 5 ist ein Warmwassereingang, mit 6 ein Kaltwassereingang, mit 7 ein Mischwasserabgang, und mit 8 sind zwei Zapfen für die Positionierung der Mischkartusche 2 bezeichnet. Die Mischkartusche 2 enthält in an sich bekannter Weise eine Vorrichtung für die Volumenstrombegrenzung und eine Vorrichtung für die Temperaturbegrenzung, die beispielsweise durch zwei entsprechend ausgebildete Keramikscheiben realisiert sind. Auf der Oberseite der Mischkartusche 2 ist innerhalb des Griffkopfes 18 ein Betätigungsschaft 14 um eine horizontale Schwenkachse 16 schwenkbar angeordnet. Durch Verschwenken des Betätigungsschaftes 14 mittels eines Bügelgriffs 9 um die Schwenkachse 16 kann die Durchflussmenge stufenlos eingestellt werden. Befindet sich der Bügelgriff 9 in der in Fig. 3 durchgezogen eingezeichneten Stellung, ist das Mischventil geschlossen. Befindet sich der Bügelgriff 9 dagegen in der gestrichelt eingezeichneten Stellung, ist das Mischventil offen.

Der Bügelgriff 9, der im gezeigten Ausführungsbeispiel eine rechteckige Grundform und einen runden Querschnitt hat, aber selbstverständlich auch anders ausgestaltet sein kann, geht am Griffkopf 18 in zwei auf der Innenseite ausgebildete Flächen 10, 10' über (Fig. 1). Ausgehend von diesen zwei Flächen 10, 10' erstreckt sich horizontal in das Innere des Griffkopfes 18 hinein je ein Zapfen 11, 11' (Fig. 1 und 4). Die beiden Zapfen 11, 11' sind im Inneren des Griffkopfes 18 über ein Joch 12 miteinander verbunden. Der Bügelgriff 9 mit den angeformten Flächen 10, 10', die beiden Zapfen 11, 11' und das Joch 12 bilden vorzugsweise ein zusammenhängendes, einstückiges Betätigungselement. Das Joch 12 weist eine Vierkant-Aussparung 13 auf, in welche der Betätigungsschaft 14 passend eingefügt und mit einer Schraube 15 seitlich festgeklemmt ist (Fig. 3 und 4). Das andere Ende des Betätigungsschaftes 14 greift in die Kalotte eines Verbindungsstückes der verschiebbaren Keramikscheibe in der Mischkartusche 2 ein (ist in den Figuren nicht dargestellt).

Die Schwenkachse 16 des Betätigungsschaftes 14 fluchtet genau mit der Drehachse 17 der Zapfen 11, 11'. Wird der Bügelgriff 9 beim Einstellen der Durchflussmenge bzw. beim Öffnen oder Schliessen des Ventils um die Schwenkachse 16 des Betätigungsschaftes 14 verschwenkt - wie dies in Fig. 3 dargestellt ist - drehen sich die Zapfen 11, 11' um die Drehachse 17, ohne eine laterale Bewegung (quer zur Achse) auszuführen. Hierdurch ist es möglich, die Zapfen 11, 11' im Griffkopf so zu lagern, dass keine nach aussen sichtbaren Öffnungen entstehen, die den geschlossenen Gesamteindruck des Griffkopfes stören und die Reinigung des Griffkopfes erschweren.

Die Lagerung der beiden Zapfen 11, 11' erfolgt in einer unteren Führungshülse 19 und einer oberen Führungshülse 20 (Fig. 7). Untere und obere Führungshülse 19 und 20 stossen auf der Höhe der Drehachse 17 zusammen und werden nach der Montage durch Schnappverbindungen 21 gehalten. Zur Lagerung der Zapfen 11, 11' sind in der unteren und oberen Führungshülse 19 bzw. 20 diagonal gegenüberliegend jeweils halbkreisförmige Aussparungen vorgesehen. Die eigentliche Lagerung der beiden Zapfen 11, 11' innerhalb der oberen und unteren Führungshülse 19 bzw. 20 erfolgt in je einer unteren Lagerhälfte 22 und einer oberen Lagerhälfte 23. Diese beiden Teile werden in die halbkreisförmigen Aussparungen der Führungshülsen 19, 20 eingesetzt und nach der Montage durch Schnappverbindungen 24, 25 mit den Führungshülsen 19, 20 fest verbunden.

Die stirnseitige Fläche 26 der unteren Lagerhälfte 22, die viereckig mit einem halbkreisförmigen Ausschnitt ist, und die stirnseitige Fläche 27 der oberen Lagerhälfte 23, welche die Form eines Halbkreisrings hat, bleiben auch nach der Montage der Führungshülsen 19, 20 und Lagerhälften 22, 23 nach aussen hin sichtbar. Der ganze Griffkopf 18 wird durch eine Haube 28 abgedeckt, die im unteren Bereich auf der Innenseite eine umlaufende Nut aufweist und durch einige Nocken 29 am äusseren Umfang der unteren Führungshülse 19 mit abziehbarem Reibverschluss an Ort und Stelle gehalten wird. Der Aussendurchmesser der Haube 28 ist identisch mit dem Aussendurchmesser der Kartuschenpartie 30 des Armaturengehäuses 1.

Die beiden sichtbaren Flächen 26 und 27 der Lagerhälften 22, 23 gehen nach der Montage nahtlos in die Umfangsflächen der Haube 28 und der Kartuschenpartie 30 über. Diese beiden Flächen 26, 27 können problemlos als dekorative oder informative Elemente eingesetzt werden. Sie können z.B. die gleiche Oberflächenstruktur wie die Oberfläche der Armatur aufweisen. Sie können aber auch farbig, beispielsweise in blau/rot für kalt/warm, ausgelegt sein.

Das in den Fig. 1 bis 7 dargestellte Mischventil ist nur ein Ausführungsbeispiel. Im Rahmen der Erfindung sind selbstverständlich auch andere Ausgestaltungen denkbar. So kann der Bügelgriff 9 eine vorn Rechteck abweichende Grundform aufweisen oder einen viereckigen Querschnitt haben. Auch die Haube 28 kann anstelle des kreisrunden einen quadratischen oder anders gearteten Querschnitt aufweisen. Auch ist es grundsätzlich denkbar, den Bügelgriff nur über einen Zapfen mit dem Betätigungsschaft 14 im Inneren des Griffkopfes 18 zu verbinden. Wesentlich ist, dass eine Standard-Kartusche mit Begrenzung des Volumenstromes (Durchflussmenge) und der Temperatur verwendet werden kann, und dass der/die in den Griffkopf eintretende(n) Zapfen des Bügelgriffes eine konzentrische Drehachse 17 aufweisen, die mit der Schwenkachse 16 des Betätigungsschaftes 14 fluchtet.

### BEZUGSZEICHENLISTE

- 1: Armaturengehäuse
- 2: Mischkartusche
- 3: Überwurfmutter
- 4: Gewinde
- 5: Warmwassereingang
- 6: Kaltwassereingang
- 7: Mischwasserabgang
- 8: Zapfen (Positionierung)
- 9: Bügelgriff
- 10,10': Fläche
- 11,11': Zapfen
- 12: Joch
- 13: Aussparung (Vierkant)
- 14: Betätigungsschaft
- 15: Schraube
- 16: Schwenkachse (Betätigungsschaft)
- 17: Drehachse (Zapfen 11)
- 18: Griffkopf
- 19: untere Führungshülse
- 20: obere Führungshülse
- 21: Schnappverbindung
- 22: untere Lagerhälfte
- 23: obere Lagerhälfte
- 24,25: Schnappverbindung
- 26,27: stirnseitige Fläche
- 28: Haube
- 29: Nocken
- 30: Kartuschenpartie (Armaturengehäuse 1)

## Patentansprüche

1. Einhebel-Mischventil mit Bügelgriff (9), umfassend eine Mischkartusche (2), welche in einem Armaturengehäuse (1) angeordnet ist und mit einem um eine Schwenkachse (16) schwenkbaren Betätigungsschaft (14) in einen nach aussen hin abgeschlossenen Griffkopf (18) hineinragt, wobei der Betätigungsschaft (14) mit dem Bügelgriff (9) über in den Griffkopf (18) hineinführende Zapfen (11, 11') betätigbar ist, wobei die Zapfen (11, 11') um eine Drehachse (17) drehbar gelagert sind, welche mit der Schwenkachse (16) des Betätigungsschaftes (14) fluchtet, **dadurch gekennzeichnet, dass** innerhalb des Griffkopfes (18) eine obere und untere Führungshülse (20 bzw. 19) miteinander verbunden sind, und dass die Zapfen (11, 11') zwischen den beiden Führungshülsen (19, 20) drehbar gelagert sind.

2. Einhebel-Mischventil nach Anspruch 1, **dadurch gekennzeichnet, dass** die beiden Führungshülsen (19, 20) durch erste Schnappverbindungen (21) miteinander lösbar verbunden sind.

3. Einhebel-Mischventil nach Anspruch 1 oder 2, **dadurch gekennzeichnet, dass** die Zapfen (11, 11') zwischen den Führungshülsen (19, 20) in einem aus zwei Lagerhälften (22, 23) gebildeten Lager drehbar gelagert sind.

4. Einhebel-Mischventil nach Anspruch 3, **dadurch gekennzeichnet, dass** die Lagerhälften (22, 23) den Führungshülsen (19, 20) zugeordnet und jeweils an der zugeordneten Führungshülse (19, 20) befestigt sind.

5. Einhebel-Mischventil nach Anspruch 4, **dadurch gekennzeichnet, dass** die Lagerhälften (22, 23) an den zugeordneten Führungshülsen (19, 20) durch zweite Schnappverbindungen (24, 25) lösbar befestigt sind.

6. Einhebel-Mischventil nach einem der Ansprüche 1 bis 5, **dadurch gekennzeichnet, dass** der Griffkopf (18) nach aussen durch eine über die Führungshülsen (19, 20) stülpbare Haube (28) abgedeckt ist.

7. Einhebel-Mischventil nach Anspruch 6 **dadurch gekennzeichnet, dass** die Haube (28) konzentrisch zu den Führungshülsen (19, 20) angeordnet ist und an der unteren Führungshülse (19) lösbar gehalten wird.

8. Einhebel-Mischventil nach Anspruch 7, **dadurch gekennzeichnet, dass** zur lösbaren Halterung der Haube (28) am äusseren Umfang der unteren Führungshülse (19) verteilt Nocken (29) angeordnet sind, welche mit einer umlaufenden Nut auf der Innenseite der Haube (28) in Eingriff sind.

9. Einhebel-Mischventil nach Anspruch 6, **dadurch gekennzeichnet, dass** die Haube (28) zum Überstülpen über die Zapfen (11, 11') entsprechende Ausnehmungen aufweist.

10. Einhebel-Mischventil nach einem der Ansprüche 3 bis 5, **dadurch gekennzeichnet, dass** die Lagerhälften (22, 23) von ausserhalb des Griffkopfes (18) sichtbare stirnseitige Flächen (26, 27) aufweisen.

11. Einhebel-Mischventil nach Anspruch 10, **dadurch gekennzeichnet, dass** die stirnseitigen Flächen (26, 27) als dekorative Flächen ausgebildet sind.

12. Einhebel-Mischventil nach Anspruch 10, **dadurch gekennzeichnet, dass** die stirnseitigen Flächen (26, 27) zur Markierung der Drehrichtung des Mischventils im Sinne von heiss/kalt farbig, insbesondere rot/blau, ausgelegt sind.

13. Einhebel-Mischventil nach einem der Ansprüche 1 bis 12, **dadurch gekennzeichnet, dass** die Zapfen (11, 11') innerhalb des Griffkopfes (18) mit einem Joch (12) in Verbindung stehen, welches Joch (12) seinerseits mit dem Betätigungsschaft (14) in Verbindung steht.

14. Einhebel-Mischventil nach Anspruch 13, **dadurch gekennzeichnet, dass** der Betätigungsschaft (14) als Vierkant ausgebildet ist, und dass das Joch (12) mit einer entsprechenden Vierkant-Aussparung (13) auf dem Betätigungsschaft (14) sitzt.

15. Einhebel-Mischventil nach Anspruch 14, **dadurch gekennzeichnet, dass** das Joch (12) auf dem Betätigungsschaft (14) mittels einer Schraube (15) fixiert ist.

16. Einhebel-Mischventil nach einem der Ansprüche 13 bis 15, **dadurch gekennzeichnet, dass** der Bügelgriff (9), die Zapfen (11, 11') und das Joch (12) Abschnitte eines einstückigen Betätigungselements sind.

## Claims

1. Single-lever mixing valve with stirrup-shaped handle (9), comprising a mixing cartridge (2) which is arranged in a fitting housing (1) and projects with an actuating shank (14), pivotable about a pivot axis (16), into a handle head (18) closed off to the outside, it being possible for the actuating shank (14) to be actuated by the stirrup-shaped handle (9) via pins (11, 11') leading into the handle head (18), the pins (11, 11') being rotatably mounted about a rotation axis (17) which is in alignment with the pivot axis (16) of the actuating shank (14), **characterized in that** a top and a bottom guide sleeve (20 and 19, resp.) are connected to one another inside the handle head (18), and **in that** the pins (11, 11') are rotatably mounted between the two guide sleeves (19, 20).

2. Single-lever mixing valve according to Claim 1, **characterized in that** the two guide sleeves (19, 20) are releasably connected to one another by first snap connections (21).

3. Single-lever mixing valve according to Claim 1 or 2, **characterized in that** the pins (11, 11') are rotatably mounted between the guide sleeves (19, 20) in a bearing formed from two bearing halves (22, 23).

4. Single-lever mixing valve according to Claim 3, **characterized in that** the bearing halves (22, 23) are assigned to the guide sleeves (19, 20) and are each fastened to the associated guide sleeve (19, 20).

5. Single-lever mixing valve according to Claim 4, **characterized in that** the bearing halves (22, 23) are releasably fastened to the associated guide sleeves (19, 20) by second snap connections (24, 25).

6. Single-lever mixing valve according to one of Claims 1 to 5, **characterized in that** the handle head (18) is covered on the outside by a hood (28) which can be put over the guide sleeves (19, 20).

7. Single-lever mixing valve according to Claim 6, **characterized in that** the hood (28) is arranged concentrically to the guide sleeves (19, 20) and is releasably held on the bottom guide sleeve (19).

8. Single-lever mixing valve according to Claim 7, **characterized in that** lugs (29) are arranged in a distributed manner on the outer circumference of the bottom guide sleeve (19) in order to releasably retain the hood (28), these lugs (29) being in engagement with an encircling groove on the inside of the hood (28).

9. Single-lever mixing valve according to Claim 6, **characterized in that** the hood (28) has corresponding recesses for putting over the pins (11, 11').

10. Single-lever mixing valve according to one of Claims 3 to 5, **characterized in that** the bearing halves (22, 23) have end faces (26, 27) which are visible from outside the handle head (18).

11. Single-lever mixing valve according to Claim 10, **characterized in that** the end faces (26, 27) are designed as decorative faces.

12. Single-lever mixing valve according to Claim 10, **characterized in that** the end faces (26, 27) are designed to be coloured, in particular red/blue, for marking the direction of rotation of the mixing valve in the sense of hot/cold.

13. Single-lever mixing valve according to one of Claims 1 to 12, **characterized in that** the pins (11, 11') are connected to a yoke (12) inside the handle head (18), which yoke (12) is in turn connected to the actuating shank (14).

14. Single-lever mixing valve according to Claim 13, **characterized in that** the actuating shank (14) is designed as a square, and **in that** the yoke (12) sits with a corresponding square aperture (13) on the actuating shank (14).

15. Single-lever mixing valve according to Claim 14, **characterized in that** the yoke (12) is fixed on the actuating shank (14) by means of a screw (15).

16. Single-lever mixing valve according to one of Claims 13 to 15, **characterized in that** the stirrup-shaped handle (9), the pins (11, 11') and the yoke (12) are sections of a one-piece actuating element.

## Revendications

1. Mitigeur à levier unique avec poignée (9), comprenant une cartouche mélangeuse (2) qui est disposée dans un boîtier de robinet (1) et qui pénètre avec une tige d'actionnement (14) pouvant pivoter autour d'un axe de pivotement (16) dans une tête de préhension (18) fermée vers l'extérieur, la tige d'actionnement (14) pouvant être actionnée avec la poignée (9) par le biais de tourillons (11, 11') entrant dans la tête de préhension (18), les tourillons (11, 11') étant montés de manière à pouvoir tourner autour d'un axe de rotation (17) qui est aligné avec l'axe de pivotement (16) de la tige d'actionnement (14), **caractérisé en ce qu'**à l'intérieur de la tête de préhension (18) sont connectées l'une à l'autre une douille de guidage supérieure et une douille de guidage inférieure (20, respectivement 19) et **en ce que** les tourillons (11, 11') sont montés à rotation entre les deux douilles de guidage (19, 20).

2. Mitigeur à levier unique selon la revendication 1, **caractérisé en ce que** les deux douilles de guidage (19, 20) sont connectées l'une à l'autre de manière desserrable par des premières connexions par encliquetage (21).

3. Mitigeur à levier unique selon la revendication 1 ou 2, **caractérisé en ce que** les tourillons (11, 11') sont montés à rotation entre les douilles de guidage (19, 20) dans un palier formé de deux moitiés de palier (22, 23).

4. Mitigeur à levier unique selon la revendication 3, **caractérisé en ce que** les moitiés de palier (22, 23) sont associées aux douilles de guidage (19, 20) et sont fixées respectivement à la douille de guidage associée (19, 20).

5. Mitigeur à levier unique selon la revendication 4, **caractérisé en ce que** les moitiés de palier (22, 23) sont fixées de manière desserrable aux douilles de guidage associées (19, 20) par des deuxièmes connexions par encliquetage (24, 25).

6. Mitigeur à levier unique selon l'une quelconque des revendications 1 à 5, **caractérisé en ce que** la tête de préhension (18) est recouverte vers l'extérieur par une calotte (28) pouvant être repliée sur les douilles de guidage (19, 20).

7. Mitigeur à levier unique selon la revendication 6, **caractérisé en ce que** la calotte (28) est disposée concentriquement aux douilles de guidage (19, 20) et est maintenue de manière desserrable sur la douille de guidage inférieure (19).

8. Mitigeur à levier unique selon la revendication 7, **caractérisé en ce que** pour la fixation desserrable de la calotte (28), on prévoit des cames (29) réparties sur la périphérie extérieure de la douille de guidage inférieure (19), qui sont en prise avec une rainure périphérique sur le côté intérieur de la calotte (28).

9. Mitigeur à levier unique selon la revendication 6, **caractérisé en ce que** la calotte (28) présente, pour le repliement par-dessus les tourillons (11, 11'), des évidements correspondants.

10. Mitigeur à levier unique selon l'une quelconque des revendications 3 à 5, **caractérisé en ce que** les moitiés de palier (22, 23) présentent des surfaces (26, 27) du côté frontal, visibles depuis l'extérieur de la tête de préhension (18).

11. Mitigeur à levier unique selon la revendication 10, **caractérisé en ce que** les surfaces (26, 27) du côté frontal sont réalisées sous forme de surfaces décoratives.

12. Mitigeur à levier unique selon la revendication 10, **caractérisé en ce que** les surfaces (26, 27) du côté frontal sont conçues pour marquer le sens de rotation du mitigeur par un marquage de couleur, notamment rouge/bleu, représentant chaud et froid.

13. Mitigeur à levier unique selon l'une quelconque des revendications 1 à 12, **caractérisé en ce que** les tourillons (11, 11') sont en liaison avec un joug (12) à l'intérieur de la tête de préhension (18), qui est pour sa part en liaison avec la tige d'actionnement (14).

14. Mitigeur à levier unique selon la revendication 13, **caractérisé en ce que** la tige d'actionnement (14) est réalisée sous forme carrée, et **en ce que** le joug (12) repose avec un évidement carré correspondant (13) sur la tige d'actionnement (14).

15. Mitigeur à levier unique selon la revendication 14, **caractérisé en ce que** le joug (12) est fixé sur la tige d'actionnement (14) au moyen d'une vis (15).

16. Mitigeur à levier unique selon l'une quelconque des revendications 13 à 15, **caractérisé en ce que** la poignée (9), les tourillons (11, 11') et le joug (12) sont des portions d'un élément d'actionnement réalisé d'une seule pièce.
